# EUROPÄISCHE PATENTANMELDUNG

(11) **EP 3 597 316 A1**
(43) Veröffentlichungstag der Anmeldung: **22.01.2020**
(21) Anmeldenummer: 18000618.1
(22) Anmeldetag: 20.07.2018
(51) Int. Cl.: B08B 1/02, B08B 3/02, B08B 5/02, B08B 9/08, B08B 9/093, B08B 9/42, B08B 9/46, B08B 13/00, B65G 15/58, B65G 15/00, B65G 15/06

(54) **REINIGUNGSMODUL FÜR EIN AUTOMATISCHES TRANSPORTSYSTEM, VERFAHREN ZU DESSEN BETRIEB UND AUTOMATISCHES TRANSPORTSYSTEM MIT DIESEM REINIGUNGSMODUL**

(71) Anmelder: Bertram Elektrotechnik GmbH, 37639 Bevern (DE)
(72) Erfinder: Peper, Heinrich, 37639 Bevern (DE); Bertram, Matthias, D-37639 Bevern (DE)
(74) Vertreter: Tomerius, Isabel

(57) **Zusammenfassung**

Die Erfindung betrifft ein Reinigungsmodul (1) zur Integration in ein automatisches Transportsystem (2) für Stückgüter (3), umfassend ein geschlossen umlaufendes Transportband (4) mit Halterungen (40) zur Aufnahme der Stückgüter (3), eine Zufuhrvorrichtung (5) zum Überführen der Stückgüter (3) von dem Transportsystem (2) in die Halterungen (40), eine der Zufuhrvorrichtung (5) in Transportrichtung (T) des Transportbandes (4) nachgelagerte Rückführvorrichtung (6) zum Rückführen der Stückgüter (3) vom Reinigungsmodul (1) zum Transportsystem (2), wenigstens eine benachbart zum Transportband (4) im Bereich zwischen Zufuhrvorrichtung (5) und Rückführvorrichtung (6) angeordnete Reinigungsvorrichtung (7), welche ausgebildet ist, ein flüssiges oder gasförmiges Reinigungsmedium in Richtung auf wenigstens ein in einer Halterung (40) angeordnetes Stückgut (3) abzugeben, eine der Reinigungsvorrichtung (7) in Transportrichtung (T) nachgelagerte Prüfvorrichtung (8), welche ausgebildet ist, das Reinigungsergebnis der Reinigungsvorrichtung (7) festzustellen und das ermittelte Ergebnis an eine Auswertungs- und Steuervorrichtung (9) zu übermitteln, wobei die Auswertungs- und Steuervorrichtung (9) ausgebildet ist, das Ergebnis auszuwerten und anhand der Auswertung die Rückführvorrichtung (6) so zu steuern, dass das Stückgut (3) entsprechend dem für dieses ermittelten Reinigungsergebnis entweder von der Rückführvorrichtung (6) zum Transportsystem (2) zurückgeführt oder aus dem Reinigungsmodul (1) und dem Transportsystem (2) ausgeschleust wird.

Die Erfindung betrifft weiter ein das Reinigungsmodul umfassendes automatisches Transportsystem sowie ein Verfahren zum Betrieb des Reinigungsmoduls.

## Beschreibung

Die Erfindung betrifft ein Reinigungsmodul für ein automatisches Transportsystem, ein das Reinigungsmodul umfassendes automatisches Transportsystem sowie ein Verfahren zum Betrieb des Reinigungsmoduls.

Automatische Transportsysteme werden in der Industrie regelmäßig zum Transport von Stückgütern in größerer Anzahl eingesetzt. Sie kommen beispielsweise bei der Herstellung und Weiterverarbeitung von Stückgütern, deren Verpackung oder bei der Befüllung von Verpackungen zum Einsatz. Anwendungsbereiche liegen unter anderem in der Lebensmittel-, Automobil- und Elektroindustrie, in ersterem Fall beispielsweise beim Transport von Flaschen, Dosen oder ähnlichen Behältnissen während des Befüllens mit Lebensmitteln oder beim Recyceln der Behältnisse. Derartige Transportsysteme umfassen in der Regel ein Transportband in Form einer Transportbahn oder einer Gliederkette, auf der gegebenenfalls Halterungen für das Stückgut angebracht sind. Meist handelt es sich um geschlossen umlaufende Transportbänder, die linear oder nicht linear verlaufen können. Die Transportebene, auf welcher die Stückgüter transportiert werden, verläuft in der Regel waagerecht, kann jedoch auch gegenüber dem Untergrund geneigt sein. Beispiele linear umlaufender Transportbänder sind beispielsweise in der EP 0093409 A2, DE 102005044538 B4, DE 102009025702 A1, DE 202010006220 U1 und DE 102015005617 A1 beschrieben. Während des Recycelns werden die Behältnisse in der Regel einer Reinigung unterzogen. Aufgrund der strengeren Hygienevorschriften wird es jedoch zunehmend erforderlich, die Behältnisse unmittelbar vor deren Befüllung (nochmals) zu reinigen. Viele ältere Transportsysteme sehen einen solchen zusätzlichen Reinigungsschritt bislang jedoch nicht vor. Um einen zusätzlichen Reinigungsschritt ausführen zu können, muss also ein zusätzliches Transportsystem für den Transport zu einer Reinigungsstation und von dort zurück zum vorhandenen Transportsystem eingebaut werden. Wegen des häufig geringen Platzangebotes ist dies oft jedoch nur schlecht zu realisieren.

Auch in anderen Bereichen als der Lebensmittelindustrie ist eine (nochmalige) Reinigung der Stückgüter vor deren weiterer Verarbeitung oder deren Befüllung sinnvoll. Nur beispielhaft sei auf die Herstellung von Arzneimitteln, Medizinprodukten oder Kosmetika verwiesen. Zudem erfordern einige Weiterverarbeitungsschritte, dass die zu bearbeitenden Stückgüter frei von Verschmutzung sind, oder Hygienevorschriften machen dies erforderlich. Es wäre daher wünschenswert, während der automatischen Verarbeitung der Stückgüter deren gewünschte oder geforderte Sauberkeit sicherstellen zu können, sei es in einem bereits existierenden oder einem neu aufzubauenden Transportsystem.

Aufgabe der Erfindung ist es entsprechend, für die vorstehend beschriebenen Probleme Abhilfe zu schaffen und insbesondere eine Möglichkeit anzugeben, einen zusätzlichen Reinigungsschritt bei geringem Platzbedarf in einfacher Weise in ein vorhandenes automatisches Transportsystem zu integrieren und gleichzeitig die gewünschte oder geforderte Sauberkeit der zu transportierenden Stückgüter sicherzustellen.

Die Lösung dieser Aufgabe gelingt mit dem Reinigungsmodul gemäß Anspruch 1, dem automatischen Transportsystem gemäß Anspruch 12 sowie dem Verfahren gemäß Anspruch 15. Bevorzugte Ausführungsformen und Verfahrensvarianten sind den jeweiligen Unteransprüchen zu entnehmen.

Die Erfindung betrifft in einem ersten Aspekt demnach ein Reinigungsmodul zur Integration in ein automatisches Transportsystem für Stückgüter, umfassend ein geschlossen umlaufendes Transportband mit Halterungen zur Aufnahme der Stückgüter, eine Zufuhrvorrichtung zum Überführen der Stückgüter von dem Transportsystem in die Halterungen, eine der Zufuhrvorrichtung in Transportrichtung des Transportbandes nachgelagerte Rückführvorrichtung zum Rückführen der Stückgüter vom Reinigungsmodul zum Transportsystem, wenigstens eine benachbart zum Transportband im Bereich zwischen Zufuhrvorrichtung und Rückführvorrichtung angeordnete Reinigungsvorrichtung, welche ausgebildet ist, ein flüssiges oder gasförmiges Reinigungsmedium in Richtung auf wenigstens ein in einer Halterung angeordnetes Stückgut zu blasen, wenigstens eine der Reinigungsvorrichtung in Transportrichtung nachgelagerte Prüfvorrichtung, welche ausgebildet ist, das Reinigungsergebnis der Reinigungsvorrichtung festzustellen und das ermittelte Ergebnis an eine Auswertungs- und Steuervorrichtung zu übermitteln, wobei die Auswertungs- und Steuervorrichtung ausgebildet ist, das Ergebnis auszuwerten und anhand der Auswertung die Rückführvorrichtung so zu steuern, dass das Stückgut entsprechend dem für dieses ermittelten Reinigungsergebnis entweder von der Rückführvorrichtung zum Transportsystem zurückgeführt oder aus dem Reinigungsmodul und dem Transportsystem ausgeschleust wird.

Durch die Erfindung wird also ein vorgefertigtes Reinigungsmodul bereitgestellt, welches nachträglich und in einfacher Weise an ein existierendes automatisches Transportsystem angebaut werden kann, ohne dass das Transportsystem selbst dabei verändert werden müsste. Dies erleichtert den Einbau erheblich, reduziert Kosten und Platzbedarf und minimiert die Ausfallzeit des existierenden Transportsystems während des Einbaus. Auch bei einem neuen Transportsystem wird dessen Aufbau und Betrieb durch den Einsatz des Reinigungsmoduls vereinfacht. Das erfindungsgemäße Reinigungsmodul ist so aufgebaut, dass es nicht nur die erforderlichen Reinigungsschritte für die Stückgüter durchführt, sondern zusätzlich eine integrierte Prüfvorrichtung bereitstellt, mit welcher der Erfolg des Reinigungsvorgangs für jedes der Stückgüter überprüft werden kann. Das Reinigungsmodul ist dabei so aufgebaut, dass nur diejenigen Stückgüter, welche entsprechend den Vorgaben gereinigt wurden, vom Reinigungsmodul wieder zum Transportsystem zurückgeführt werden, während diejenigen Stückgüter, bei denen der Reinigungsvorgang nicht zum erforderlichen Reinigungsergebnis geführt hat, aussortiert, dem Transportsystem nicht wieder zugeführt und aus dem Reinigungsmodul und dem Transportsystem ausgeschleust werden. Damit ist sichergestellt, dass Hygienevorschriften oder sonstige Vorgaben an die Sauberkeit der Stückgüter eingehalten werden. Alle diese Schritte geschehen vollautomatisch und erfordern keinerlei Eingriff von Seiten des Anwenders.

Das Reinigungsmodul erlaubt trotz seines kompakten Aufbaus eine variable Anpassung sowohl des Reinigungsvorgangs als auch der Prüfung desselben an die Bedürfnisse des Anwenders. Dabei bleibt der Grundaufbau des Reinigungsmoduls mit einem geschlossenen umlaufenden Transportband erhalten. Jedoch kann beispielsweise die Länge des Transportbandes variiert werden, um dieses der erforderlichen Anzahl an Stationen anzupassen. Beispielsweise kann das Transportband verlängert werden, um für mehrere Reinigungsvorrichtungen und/oder mehrere Prüfvorrichtungen Platz zu schaffen. Zudem kann Platz für weitere Bearbeitungsstationen vorgesehen werden. Auch die Art, Anordnung und Anzahl der Halterungen für die Stückgüter kann variiert werden. Hierauf wird nachfolgend noch im Einzelnen eingegangen werden.

Für den Grundaufbau des Reinigungsmoduls kann auf grundsätzlich bekannte Komponenten zurückgegriffen werden. Es können prinzipiell die bereits aus dem Stand der Technik bekannten Systeme mit geschlossen umlaufendem Transportband verwendet werden. Beispielhaft, aber nicht abschließend, wird auf die eingangs genannten Dokumente und den sich aus diesen ergebenden Stand der Technik verwiesen. Bevorzugt wird als Transportband eine Gliederkette, insbesondere eine Gliederkette mit Laufrollen (Rollenkette) verwendet, da diese besonders stabil, gleichmäßig und im Wesentlichen verschließfrei umläuft und sich gut zur Anbringung der Halterungen für die Stückgüter eignet. Zweckmäßig handelt es sich bei dem Transportband um ein linear umlaufendes Band, insbesondere um eine linear umlaufende Gliederkette, da dies für einen geringen Platzbedarf sorgt und das Überführen der Stückgüter vom Transportsystem auf das Reinigungsmodul und zurück erleichtert.

Gegenstand der Erfindung ist außerdem ein automatisches Transportsystem, welches ein Förderband zum Fördern von Stückgütern in einer Förderrichtung aufweist und bei welchem seitlich des Förderbandes ein erfindungsgemäßes Reinigungsmodul angeordnet ist. Der Anbringungsort wird zweckmäßig so gewählt, dass sich das Reinigungsmodul, bevorzugt ein solches mit einem linear umlaufenden Transportband, seitlich eines gerade verlaufenden Abschnittes des Förderbandes des Transportsystems befindet. Dabei wird eine der Transportebenen des Reinigungsmoduls zweckmäßig so angeordnet, dass sie mit der Förderebene des automatischen Transportsystems zusammenfällt. Auf diese Weise ist das Überführen der Stückgüter am einfachsten zu bewerkstelligen, da die Stückgüter ohne Veränderung ihrer Höhenlage zwischen Reinigungsmodul und Transportsystem quer verschoben werden können. Werden die Stückgüter auf dem Förderband des automatischen Transportsystems stehend transportiert, wird das Reinigungsmodul also zweckmäßig so seitlich des Transportsystems angeordnet, dass das Obertrum des Transportbandes benachbart zum Förderband zu liegen kommt und die Förderebene des Förderbandes und die Transportebene des Obertrums in derselben Ebene liegen. Es ist jedoch ebenfalls möglich, das erfindungsgemäße Reinigungsmodul in Transportsysteme zu integrieren, in denen die Stückgüter hängend gefördert werden. In diesem Fall wird entsprechend das Untertrum des Transportbandes so neben dem Förderband angeordnet, dass Förderebene und Transportebene in einer Ebene liegen. Grundsätzlich kann das erfindungsgemäße Reinigungsmodul auch in Kombination mit schräg verlaufenden Förderbändern eingesetzt werden, jedoch sind Anordnungen bevorzugt, bei denen Obertrum und Untertrum des Transportbandes im Wesentlichen waagerecht verlaufen (mit einer Neigung von nicht mehr als ± 5° bezüglich der Waagerechten).

Das Reinigungsmodul kann grundsätzlich in jedem beliebigen Winkel (Förderrichtung des Förderbandes zu Transportrichtung des Transportbandes im Bereich von Ober- oder Untertrum) zum Förderband des Transportsystems ausgerichtet werden. Beispielsweise ist es möglich, das Reinigungsmodul senkrecht zum Transportsystem auszurichten, sodass die Stückgüter vom Förderband des Transportsystems auf einen stirnseitigen Bereich des Transportbandes des Reinigungsmoduls überführt werden. Eine derartige Anordnung - oder auch eine schräge Anordnung des Reinigungsmoduls zum Transportsystem - erfordert jedoch einen erhöhten Aufwand bei der Rückführung der ausreichend gereinigten Stückgüter zum Transportsystem. Aus diesem Grund ist es erfindungsgemäß bevorzugt, das Reinigungsmodul im Wesentlichen parallel (mit einem maximalen Winkel von 5°) und besonders bevorzugt exakt parallel zum Förderband des Transportsystems auszurichten. Sinnvollerweise wird der Abstand zwischen beiden Systemen dabei möglichst gering gehalten.

Von besonderem Vorteil ist es, wenn das Reinigungsmodul so angeordnet wird, dass die Transportrichtung sich von der Förderrichtung des Förderbandes unterscheidet und dieser bevorzugt entgegen gerichtet ist. Diese Anordnung erlaubt es, die Stelle, an welcher vom Reinigungsmodul gereinigte und als sauber befundene Stückgüter zum Transportsystem zurückgeführt werden, unmittelbar in Förderrichtung anschließend oder in geringer Entfernung zu derjenigen Stelle vorzusehen, von der aus die Stückgüter vom Förderband auf das Transportband des Reinigungsmoduls überführt werden. Für die Integration des erfindungsgemäßen Reinigungsmoduls wird daher nur eine sehr kurze Wegstrecke des Förderbandes des Transportsystems benötigt, sodass sich das Reinigungsmodul auch zur Integration in solche existierenden Transportsysteme eignet, bei denen für den Anbau nur eine kurze Förderstrecke zur Verfügung steht. Wie bereits erwähnt, ist für die Integration des Reinigungsmoduls in das Transportsystem kein größerer Umbau an diesem erforderlich.

In das erfindungsgemäße Reinigungsmoduls können grundsätzlich verschiedenste Arten von Reinigungsvorrichtungen integriert werden. Beispielhaft können Düsensysteme genannt werden, mit denen eine Reinigungsflüssigkeit wie Wasser, ein wässriges oder organisches Lösemittel auf das Stückgut gespritzt wird. Bei Verwendung mehrerer Reinigungsvorrichtungen können auch verschiedene Arten von flüssigen und/oder gasförmigen Reinigungsmedien eingesetzt werden. Das erfindungsgemäße Reinigungsmodul verwendet bevorzugt wenigstens eine Reinigungsvorrichtung, welche ausgebildet ist, ein Gas in Richtung auf wenigstens ein in einer Halterung angeordnetes Stückgut zu blasen. In der Regel wird es sich bei dem Gas um Luft handeln. Bevorzugt wird ionisierte Druckluft verwendet, da diese eine statische Entladung des Stückguts bewirkt, wodurch sich aufgrund statischer Aufladung an der Oberfläche des Stückguts anhaftende Partikel besonders gut vom Stückgut ablösen. Es ist jedoch ebenfalls denkbar, für besonders empfindliche Stückgüter, beispielsweise elektronische Bauteile oder sonstige oxidationsempfindliche Güter, ein Schutzgas wie beispielsweise Stickstoff zu verwenden. Es können mehrere Reinigungsvorrichtungen mit gleichen oder verschiedenen Reinigungsverfahren eingesetzt werden. Nachfolgend wird die Erfindung der Einfachheit halber weiter am Beispiel von Druckluft beschrieben, was jedoch die Verwendung von ionisierter Druckluft, eines anderen Gases mit einschließen und in analoger Weise für ein flüssiges Reinigungsmedium gelten soll.

Zum Ausblasen der Druckluft in Richtung auf das zu reinigende Stückgut wird zweckmäßig eine Ausblasdüse verwendet. Deren Anordnung, Art und Größe sowie deren Betriebsparameter wie Strömungsgeschwindigkeit und Ausblasdruck werden entsprechend dem zu reinigenden Stückgut ausgewählt und diesem so angepasst, dass die gewünschte Reinigungswirkung erzielt wird. Selbstverständlich können auch mehrere Ausblasdüsen zur Reinigung des Stückguts verwendet werden. Bevorzugt werden diese zu einer Gruppe angeordnet, sodass auch Stückgut mit einer größeren zu reinigenden Oberfläche in einem einzigen Reinigungsschritt gereinigt werden kann. Es ist jedoch ebenfalls möglich, mehrere Reinigungsvorrichtungen in Transportrichtung hintereinander vorzusehen, um verschiedene Bereiche des Stückguts nacheinander zu reinigen, wobei jede einzelne Reinigungsvorrichtung entweder eine Ausblasdüse oder eine Gruppe von Ausblasdüsen aufweisen kann. Außerdem kann es sinnvoll sein, mehrere Reinigungsvorrichtungen hintereinander vorzusehen, wenn eine besonders gründliche Reinigung erforderlich ist. Die wenigstens eine Ausblasdüse der wenigstens einen Reinigungsvorrichtung kann feststehend so angeordnet werden, dass der abgegebene Druckluftstrom die Oberfläche oder einen ausgewählten Bereich der Oberfläche des Stückguts trifft. Möglich ist es allerdings auch, die Ausblasdüse in Richtung auf das Stückgut hin beweglich zu lagern. Dies kann vor allem dann sinnvoll sein, wenn es sich bei dem zu reinigenden Stückgut um einen Hohlkörper, beispielsweise eine Dose, eine Flasche oder Ähnliches, handelt. Zur Reinigung kann die Ausblasdüse dann in den Hohlkörper eingefahren werden, und nach Abschluss der Reinigung wird die Ausblasdüse wieder aus dem Hohlkörper entfernt und in die Ausgangsposition zurückgefahren.

Geeignete Arten von Ausblasdüsen umfassen beispielsweise Ausblasnadeln, welche sich besonders für enge und hohe Hohlkörper-Stückgüter wie insbesondere Flaschen eignen, Ringdüsen oder Rotationsdüsen. Bei letzteren handelt es sich um Düsen, welche einen Luftstrom in Form einer Spirale erzeugen. Aufgrund der Rotation des austretenden Luftstroms kann mit einer Rotationsdüse ein relativ großer Bereich von einem konzentrierten und scharfen Luftstrom abgedeckt werden. Erfindungsgemäß bevorzugt ist eine Anordnung, bei welcher mehrere Reinigungsvorrichtungen, insbesondere zwei Reinigungsvorrichtungen, in Transportrichtung hintereinander angeordnet sind, die jeweils eine Rotationsdüse umfassen. Dabei erzeugt eine erste der Rotationsdüsen eine Luftströmung mit einer ersten Rotationsrichtung und die zweite Rotationsdüse einen Luftstrom mit einer zweiten Rotationsrichtung, die sich von der ersten Rotationsrichtung unterscheidet. Beispielsweise erzeugt die erste Rotationsdüse eine Luftströmung, die sich beim Blick auf die Düse im Uhrzeigersinn dreht, während die zweite Rotationsdüse eine Luftströmung mit Rotation entgegen dem Uhrzeigersinn erzeugt. Die unterschiedliche Angriffsrichtung der Luftströmungen auf die Schmutzpartikel, welche an dem Stückgut haften, führt zu einer besonders guten Reinigungswirkung.

Beim Einsatz einer verfahrbaren Ausblasdüse ist es erforderlich, den Transport der Stückgüter mittels des Transportbandes des Reinigungsmoduls und das Ein- und Ausfahren der Ausblasdüse zu koordinieren. Gleiches gilt, wenn Druckluft nicht kontinuierlich ausgeblasen wird, sondern nur dann, wenn der Ausblasdüse gegenüber liegend ein Stückgut für die Reinigung vorhanden ist. Das diskontinuierliche Ausblasen von Druckluft nur in dem Fall, wenn tatsächlich ein zu reinigendes Stückgut bei der Reinigungsvorrichtung angekommen ist, ist erfindungsgemäß bevorzugt, da auf diese Weise gegenüber dem kontinuierlichen Betrieb Kosten eingespart werden können. Zu diesem Zweck ist es bevorzugt, eine Antriebsvorrichtung für das Transportband zu verwenden, welche einen getakteten Betrieb ermöglicht. Derartige Antriebsvorrichtungen und ihr Einsatz bei Transportbändern sind grundsätzlich bekannt. Die Antriebsvorrichtungen weisen üblicherweise einen Schrittmotor und ein Schrittschaltgetriebe auf und bewirken einen schrittweisen Vorschub des Transportbandes und der auf dem Transportband befestigten Halterungen für die Stückgüter mit einstellbarer Wegstrecke in vorgegebenen Zeitintervallen. Die dem Transportband zugeordneten Bearbeitungsstationen, hier insbesondere die wenigstens eine Reinigungsvorrichtung und die wenigstens eine Prüfvorrichtung, werden den Wegstrecken des schrittweisen Vorschubs entsprechend angeordnet, sodass die transportierten Stückgüter den Stationen gegenüber zu liegen kommen und in den Bearbeitungsstationen bearbeitet werden können.

Das erfindungsgemäße Reinigungsmodul weist zudem eine Prüfvorrichtung auf, mit welcher das Reinigungsergebnis einer in Transportrichtung des Transportbandes vorgelagerten Reinigungsvorrichtung festgestellt werden kann. Welche Prüfvorrichtung zum Einsatz kommt, hängt maßgeblich von der Art der zu reinigenden Stückgüter und der zu beseitigenden Verschmutzung ab. Eine Möglichkeit besteht beispielsweise in der Messung einer Oberflächenspannung, wenn diese vom Grad der Verschmutzung der Oberfläche abhängig ist. Auch das Auswiegen der Stückgüter, der Einsatz eines Metalldetektors oder eine Magnetfeldmessung bei nichtmetallischen Stückgütern und metallischen Verunreinigungen, Messung von Röntgen- oder anderer Strahlung oder Ähnliches sind möglich. Von Vorteil kann die Verwendung einer optischen Prüfvorrichtung sein. Diese umfasst zweckmäßig eine Beleuchtungsvorrichtung, mit welcher die zu reinigende Oberfläche des Stückguts (mit sichtbarem Licht) beleuchtet wird, sowie eine Kamera, bei der es sich insbesondere um eine Digitalkamera handelt, zur Aufnahme eines Fotos von der gereinigten Oberfläche des Stückguts. Auch hier hängen die Wahl der Beleuchtungsvorrichtung und der Kamera von der Art der zu reinigenden Stückgüter ab. Sollen beispielsweise Staubpartikel von der Oberfläche des Stückguts entfernt werden, kann es sinnvoll sein, den Kontrast zwischen Staubpartikeln und Oberfläche des Stückguts zu ermitteln. Dabei kann es zweckmäßig sein, die Beleuchtung mittels der Beleuchtungsvorrichtung so einzustellen, dass sich ein besonders hoher Kontrast ergibt. Außerdem kann die Verwendung von Monochrom-Fotos die Auswertung und die Ermittlung der Anzahl und/oder Größe der auf der Oberfläche nach der Reinigung verbliebenen Staubpartikel erleichtern.

Kompliziert geformte Stückgüter und insbesondere Stückgüter in Form von Hohlkörpern erfordern häufig eine speziell auf diese abgestimmte Beleuchtung für die Ermittlung des Reinigungsergebnisses. Dabei kann es sich als notwendig oder sinnvoll erweisen, mehrere Prüfvorgänge nacheinander durchzuführen, bei denen die Stückgüter von verschiedenen Prüfvorrichtungen mit jeweils unterschiedlichen Beleuchtungsvorrichtungen beleuchtet und/oder mit unterschiedlichen Kameras oder unterschiedlichen Kameraeinstellungen betrachtet werden. Durch Verwendung unterschiedlicher Beleuchtungsvorrichtungen können beispielsweise unterschiedliche Bereiche der zu reinigenden Oberfläche beleuchtet werden, sodass eine vollständige Beleuchtung und damit Auswertung der Oberfläche möglich wird, die mit einer einzigen Beleuchtung nicht vollständig oder nicht gleichmäßig ausgeleuchtet werden könnte. Zur Aufnahme der jeweiligen Beleuchtungssituation wird dann eine geeignete Kamera oder Kameraeinstellung ausgewählt, um ein möglichst gutes Foto zu erhalten. Insgesamt ergibt sich aus einer Kombination der Fotos oder von Teilbereichen derselben ein Gesamtbild der Oberfläche des Stückguts.

Zum Einsatz kommen kann dabei grundsätzlich jede Art von Beleuchtungsvorrichtung, welche zur Beleuchtung des Stückguts geeignet ist. Beispielhaft sei auf Vorrichtungen verwiesen, welche eine Dombeleuchtung, koaxial eingespielte Beleuchtung oder Ringbeleuchtung erzeugen. Die ersten beiden Beispiele eignen sich besonders zur gleichmäßigen Beleuchtung ebener Flächen, während letztere bei der Ausleuchtung von Randbereichen eines Hohlkörpers zum Einsatz kommen kann. Zur gleichmäßigen Ausleuchtung eines Hohlkörpers bietet sich daher beispielsweise die Kombination einer koaxial eingespielten Beleuchtung oder Dombeleuchtung mit einer Ringbeleuchtung an, um sowohl die flächigen als auch die Randbereiche des Hohlkörpers auszuleuchten. Für die Aufnahme können entweder unterschiedliche Kameras oder dieselbe Kamera mit zum Beispiel unterschiedlichen Belichtungszeiten verwendet werden. Um den Betrieb des Reinigungsmoduls nicht zu verlangsamen, ist es bevorzugt, die unterschiedlichen Beleuchtungsvorrichtungen in unterschiedlichen Prüfvorrichtungen an unterschiedlichen, in Transportrichtung aufeinander folgenden, insbesondere unmittelbar aufeinander folgenden, Positionen vorzusehen, die von dem jeweiligen Stückgut nacheinander durchlaufen werden. Grundsätzlich denkbar, wenn auch weniger bevorzugt, ist es jedoch auch, das Stückgut während des Prüfvorgangs nicht weiter zu transportieren und stattdessen die Beleuchtungsvorrichtungen und/oder Kameras zu wechseln, während das Stückgut an derselben Position verbleibt. Gleiches gilt im übrigen auch in dem Fall, dass der wenigstens einen Prüfvorrichtung vorgeschaltet mehr als eine Reinigungsvorrichtung verwendet wird. Auch hier ist es bevorzugt, die Reinigungsvorrichtungen an aufeinander folgenden Positionen in Transportrichtung vorzusehen anstatt die Reinigungsvorrichtungen auszutauschen, während das Stückgut in derselben Position verbleibt.

Welcher Art die im erfindungsgemäßen Reinigungsmodul zu bearbeitenden Stückgüter sein können, ist nicht besonders beschränkt. Es kann sich beispielsweise um flächige Stückgüter wie Platten oder Paneele aus dem Bau- oder Möbelbaubereich handeln. Derartige Platten sind häufig mit einer Außenschicht aus Kunststoff kaschiert, die sich aufladen kann und an der sich Staub angelagert, der vor der Weiterverarbeitung oder Verpackung entfernt werden sollte. Ebenso bietet sich die Reinigung von Elektrokomponenten an. Auf die besonderen Hygienevorschriften im Bereich der Lebensmittel-, Kosmetika-, Medizinprodukte- und Arzneimittelproduktion wurde bereits hingewiesen. In den zuletzt genannten Bereichen ist vor allem sicherzustellen, dass die Produkte in saubere Behältnisse bzw. Verpackungen abgefüllt werden. Die Erfindung ermöglicht nicht nur die Bereitstellung solcher sauberer Behältnisse oder Verpackungen, sondern erlaubt gleichzeitig auch eine Kontrolle und damit einen gesicherten Verfahrensablauf. Ein besonderer Fokus der Erfindung liegt daher auf der Reinigung von Verpackungsmaterialien und vor allem Verpackungsbehältnissen wie zum Beispiel Dosen, Flaschen, Gläser, Tiegel oder ähnlichem.

Entsprechend dem zu reinigenden Stückgut werden auch die Halterungen zu deren Aufnahme im erfindungsgemäßen Reinigungsmodul ausgebildet. Zweckmäßig handelt es sich dabei um formschlüssige Halterungen, deren Form dem aufzunehmenden Stückgut oder zumindest einem Teil desselben angepasst ist. Bei druckempfindlichen Stückgütern wie beispielsweise Kunststoffflaschen werden die Halterungen für diese zweckmäßig so ausgebildet, dass sie entweder an einem stabilen Bereich des Stückguts anliegen oder das Stückgut großflächig umgeben. Handelt es sich bei dem Stückgut um eine Dose, ist die Halterung bevorzugt so ausgebildet, dass die Dose nur an ihrem bodenseitigen Rand gehalten wird. Die Halterung ist dafür bevorzugt so ausgebildet, dass mit einem Abstand zu einer Bodenplatte, welcher geringfügig größer ist als die Höhe des Dosenrandes, ein über drei Seiten umlaufender Flansch ausgebildet ist, der eine U-förmige Innenkontur entsprechend dem Außenumfang der Dose aufweist und an einer Seite eine Einschuböffnung offen lässt, durch welche die Dose in die Halterung eingeschoben werden kann, wobei der Dosenrand zwischen Bodenplatte und Flansch zu liegen kommt. Um ein Herausrutschen der Dose aus der Halterung zu verhindern, kann eine bewegliche Sperrklinke vorgesehen sein, die entweder federnd gelagert oder motorisch bewegbar ist und ausfährt, sobald sich eine Dose in der Halterung befindet. Auf diese Weise kann die Dose sicher in der Halterung gelagert und auch mit ihrer Öffnung seitwärts oder nach unten gerichtet transportiert werden, ohne dass die Gefahr besteht, dass die Dose in ihrem Wandbereich eingedrückt wird, da sie ausschließlich am stabilen Dosenrand gehalten wird. Soll die Dose aus der Halterung entfernt werden, wird die Sperrklinke zurückgezogen, sodass die Dose für die Entnahme freigegeben wird.

Das Transportband des erfindungsgemäßen Reinigungsmoduls, welches, wie erwähnt, bevorzugt eine Gliederkette ist, kann so ausgebildet sein, dass die Halterungen gewechselt werden können, um das Reinigungsmodul an unterschiedliche Stückgüter anpassen zu können. In einer bevorzugten Variante ist das Transportband mit Halterungen unterschiedlicher Art bestückt, um verschiedene Arten Stückgüter oder gleichartige Stückgüter unterschiedlicher Größe aufnehmen zu können, ohne die Halterungen wechseln zu müssen. Auf diese Weise können Ausfallzeiten beim Betrieb des Reinigungsmoduls für den Wechsel der Halterungen vermieden werden. Um die Steuerung zu vereinfachen, sind die verschiedenen Halterungen im gleichmäßigen Wechsel auf dem Transportband angeordnet, also beispielsweise A-B-A-B-... oder A-B-C-A-B-C-... usw. Der Vorschub des Transportbandes wird dann entsprechend so eingestellt, dass nur Halterungen einer Sorte, beispielsweise der Sorte A, gegenüber den Bearbeitungsstationen (Reinigungs- und Prüfstationen) zu liegen kommen, während die Halterungen der übrigen Sorten an den Stationen vorbeifahren.

Grundsätzlich ist es bevorzugt, dass eine Halterung jeweils ein Stückgut aufnimmt. Es ist jedoch ebenfalls denkbar, dass eine Halterung zur Aufnahme mehr als eines Stückguts, beispielsweise zweier Stückgüter, ausgebildet ist. Diese können beispielsweise quer zur Transportrichtung des Transportbandes nebeneinander in die Halterung eingesetzt werden. Entsprechend wird dann die Anzahl der Reinigungsvorrichtungen und Prüfvorrichtungen vergrößert, sodass für jedes Stückgut in der Halterung in jeder der durchlaufenden Stationen eine eigene Reinigungs- bzw. Prüfvorrichtung vorhanden ist. Dabei ist es selbstverständlich möglich, dass die Reinigungsvorrichtungen bzw. Prüfvorrichtungen für die in einer Halterung angeordneten Stückgüter in der jeweiligen Station miteinander kombiniert und koordiniert betrieben werden. Beispielsweise können also zwei nebeneinander angeordnete Ausblasdüsen mit einer gemeinsamen Zuleitung für Druckluft versehen werden. Sollen die Ausblasdüsen in Richtung auf die Stückgüter verfahren werden, geschieht dies zweckmäßig ebenfalls mit einer gemeinsamen Antriebsvorrichtung, die die Ausblasdüsen gemeinsam in Richtung auf die Stückgüter ausfährt und anschließend wieder zurückzieht. In analoger Weise kann bei den Prüfvorrichtungen vorgegangen werden.

Beschleunigen lässt sich der Durchsatz des erfindungsgemäßen Reinigungsmoduls auch bei Verwendung von Halterungen für jeweils nur ein Stückgut, nämlich dadurch, dass der Bestückungsvorgang der Halterungen mithilfe mehrerer Zufuhrvorrichtungen erfolgt. Beispielsweise werden zwei Zufuhrvorrichtungen eingesetzt, die im Wesentlichen zeitgleich je ein Stückgut vom Förderband der Transportvorrichtung in Halterungen des Reinigungsmoduls überführen. Zweckmäßig ist dann auch eine der Anzahl der Zufuhrvorrichtungen entsprechende Anzahl von Rückführvorrichtungen vorhanden, mit denen ausreichend gereinigte Stückgüter zurück auf das Förderband des Transportsystems befördert werden. Außerdem entspricht die Anzahl der Reinigungs- und Prüfvorrichtungen dann der Anzahl der Zufuhrvorrichtungen oder beträgt ein ganzes Vielfaches dieser Anzahl, wenn mehr als eine Reinigungs- oder Prüfvorrichtung in Transportrichtung nacheinander verwendet wird.

Als Zufuhrvorrichtung und Rückführvorrichtung können grundsätzlich aus dem Stand der Technik bereits bekannte Vorrichtungen eingesetzt werden. Beispielsweise kann es sich um automatisch betätigte Schieber oder Greifer handeln, die bevorzugt an die Form des jeweiligen Stückguts angepasst sind. Bei leichten Stückgütern ist auch der Einsatz einer Blasvorrichtung möglich, mit welcher die Stückgüter durch Beaufschlagung mit Luftdruck bewegt werden. Dabei können in an sich bekannter Weise Führungsmittel wie beispielsweise Führungsschienen verwendet werden, die ein Umkippen des Stückguts verhindern.

Die Entscheidung, ob ein Stückgut nach Durchlaufen der wenigstens einen Reinigungsvorrichtung und wenigstens einen Prüfvorrichtung zum Transportsystem zurückgeführt wird, weil es für ausreichend gereinigt befunden wurde, oder aussortiert wird, wird in der Auswertungs- und Steuervorrichtung des Reinigungsmoduls getroffen. In einer Möglichkeit ist die Auswertungs- und Steuervorrichtung in das Reinigungsmodul integriert und dient bevorzugt nicht nur der Auswertung des Prüfungsergebnisses, sondern auch der Steuerung der übrigen Komponenten des Reinigungsmoduls. Es ist jedoch ebenfalls möglich, die Auswertungs- und Steuervorrichtung in ein externes Computersystem zu integrieren, beispielsweise in das zur Steuerung des automatischen Transportsystems bereits vorhandene Computersystem. Die Auswertungs- und Steuervorrichtung enthält Software, welche dazu dient, die von der wenigstens einen Prüfvorrichtung übermittelten Daten auszuwerten und entsprechend dem Ergebnis der Auswertung die Rückführvorrichtung(en) so zu steuern, dass ausreichend gereinigte Stückgüter zum automatischen Transportsystem zurück gefördert werden, während nicht ausreichend gereinigte Stückgüter aussortiert und aus dem Reinigungsmodul und dem automatischen Transportsystem ausgeschleust bzw. letzterem nicht wieder zugeführt werden.

Handelt es sich bei der wenigstens einen Prüfvorrichtung um eine optische Prüfvorrichtung, ist die Software beispielsweise ausgebildet, die von der wenigstens einen Prüfvorrichtung gelieferten Fotos bzw. Bilddaten auszuwerten. Derartige Auswertungs-Software ist grundsätzlich bekannt und muss daher hier nicht weiter erläutert werden. Sie wird beispielsweise von der Anmelderin der vorliegenden Patentanmeldung angeboten. Beispielsweise ermittelt die Software Bildpunkte mit einem bestimmten Durchmesserbereich, welche sich farblich vom Hintergrund abheben. Dabei ist es, wie bereits erwähnt, möglich, verschiedene Fotos bzw. deren Bilddaten auszuwerten, aus denen sich ein Gesamtbild des Stückguts ergibt. Die Anzahl der Bildpunkte wird ausgezählt und mit einer hinterlegten maximalen Anzahl verglichen. Die Bildpunkte stehen dabei für Schmutzpartikel mit einem bestimmten Partikeldurchmesser. Ergibt die Auszählung, dass die Anzahl der Bildpunkte die vorgegebene maximale Anzahl nicht übersteigt, befindet die Software, dass das gewünschte Reinigungsergebnis erreicht wurde, und die Auswertungs- und Steuervorrichtung veranlasst die Rückführvorrichtung, das Stückgut, zu dem die ausgewerteten Daten gehören, zum Transportsystem zurückzuführen. Umgekehrt werden die Stückgüter, bei denen die Zahl der Bildpunkte größer ist als die vorgegebene maximale Anzahl, automatisch aussortiert.

Zum Aussortieren der nicht ausreichend gereinigten Stückgüter kann im Reinigungsmodul zusätzlich zur Rückführvorrichtung eine Ausschleusvorrichtung vorgesehen sein. Bei dieser kann es sich, wie bei den Zufuhr- und Rückführvorrichtungen, um einen Schieber, Greifer oder eine Blasvorrichtung handeln. Möglich ist auch, lediglich einen Mitnehmer vorzusehen, beispielsweise in Form einer Schiene, welche in Transportrichtung vor dem auszuschleusenden Stückgut eingeschoben dieses aus der Transportrichtung umlenkt, sodass es seitlich vom Transportband fällt und beispielsweise von einem Sammelbehälter für aussortierte Stückgüter aufgenommen wird. Anstatt die nicht ordentlich gereinigten Stückgüter in einem Sammelbehälter aufzufangen, ist es ebenfalls möglich, die Stückgüter auf eine andere Transportvorrichtung zu überführen, um sie beispielsweise dem automatischen Transportband wieder zuzuführen, sodass sie das erfindungsgemäße Reinigungsmodul erneut durchlaufen, bis sie ausreichend gereinigt sind.

In einer bevorzugten Ausführungsform ist das Reinigungsmodul so ausgebildet, dass in der wenigstens einen Reinigungsvorrichtung von den Stückgütern entfernte Verunreinigungen kontrolliert gesammelt werden. Dies ermöglicht beispielsweise eine gezielte Entsorgung und verhindert eine Verschmutzung der Umgebung des automatischen Transportsystems. Zu diesem Zweck wird beispielsweise unterhalb des Reinigungsmoduls eine Wanne angeordnet, welche die von den Stückgütern entfernten Verunreinigungen auffängt. Zweckmäßig besitzt die Wanne einen Auslass, beispielsweise in Form eines am Boden der Wanne an deren tiefster Stelle angeordneten, vorzugsweise verschließbaren, Stutzen, aus dem die Verunreinigungen entfernt werden können. In einer Weiterbildung ist das Reinigungsmodul insgesamt eingehaust, wobei der untere Teil des Gehäuses entsprechend der vorstehend beschriebenen Wanne ausgebildet sein oder eine solche Wanne enthalten kann. Falls gewünscht, kann auch der dem Reinigungsmodul benachbarte Abschnitt des automatischen Transportsystems mit in das Gehäuse eingeschlossen werden. Handelt es sich bei den zu entfernenden Verunreinigungen um feste Partikel, beispielsweise Staub, wird zusätzlich bevorzugt eine Absaugvorrichtung vorgesehen, welche an den Auslassstutzen angeschlossen wird. Die Absaugvorrichtung weist zweckmäßig eine Filtervorrichtung auf, welche den von der Absaugvorrichtung aus dem Gehäuse abgesaugten Staub abfängt. Die Absaugvorrichtung wird dabei vorzugsweise so betrieben, dass das von ihr pro Zeiteinheit abgesaugte Luftvolumen größer ist als das von der wenigstens einen Reinigungsvorrichtung ausgeblasene Volumen. Dadurch wird in dem das Reinigungsmodul umgebenden Gehäuse ein Unterdruck erzeugt, der verhindert, dass Staubpartikel aus dem Gehäuse nach außen dringen. Eine Verunreinigung der Umgebung wird auf diese Weise sicher verhindert.

Das erfindungsgemäße Verfahren sieht schließlich in einer bevorzugten Verfahrensvariante noch einen Prüfungsvorgang vor, mit welchem geprüft werden kann, ob das erfindungsgemäße Reinigungsmodul ordnungsgemäß funktioniert. Zu diesem Zweck wird ein Stückgut mit einem definierten Verschmutzungsgrad bereitgestellt und einem Verfahrensdurchgang im Reinigungsmodul unterzogen. Das Stückgut durchläuft also nach dem Einstellen in eine Halterung die wenigstens eine Reinigungsvorrichtung und wenigstens eine Prüfvorrichtung, wobei das Reinigungsergebnis wie während eines normalen Betriebs von der Auswertungs- und Steuervorrichtung ausgewertet wird. Ergänzend werden die bei der Reinigung vom Stückgut entfernten Schmutzpartikel aufgefangen und von Hand ausgezählt. Das Ergebnis der manuellen Auswertung wird mit dem Ergebnis des Reinigungsmoduls verglichen. Alternativ kann anstelle der manuellen Auswertung auch eine automatisierte Auszählung erfolgen. Idealerweise sollte die Summe der von Hand ausgezählten Schmutzpartikel plus der von der Prüfvorrichtung ermittelten restlichen Schmutzpartikel der Anzahl der Schmutzpartikel, die bei der gezielten Verschmutzung in das Stückgut eingebracht wurden, entsprechen. In der Praxis wird jedoch eine Marge definiert werden, innerhalb derer Abweichungen noch als akzeptabel angesehen werden und das Reinigungsmodul als zuverlässig arbeitend erachtet wird. Vorzugsweise werden für die Bewertung mehrere definiert verschmutzte Stückgüter nacheinander diesem Prüfungsvorgang unterzogen, um ein zuverlässigeres Ergebnis zu erhalten. Vereinfacht werden kann die manuelle Auszählung dadurch, dass die definiert eingebrachten Schmutzpartikel mit einem Fluoreszenzmaterial beschichtet werden. Bei entsprechender Beleuchtung geben die Partikel dann Fluoreszenzlicht ab, wodurch sie für die Auszählung leichter sichtbar werden. Der Prüfungsvorgang kann in definierten Abständen durchgeführt werden, um einen sicheren Betrieb des Reinigungsmoduls zu gewährleisten, oder dann, wenn der Eindruck entsteht, das Reinigungsmodul arbeite möglicherweise nicht fehlerfrei.

Die Erfindung soll nachfolgend anhand von Zeichnungen näher erläutert werden. Die Zeichnungen dienen der Beschreibung einiger bevorzugter Ausführungsformen und Verfahrensvarianten, ohne dass die Erfindung auf diese beschränkt wäre. Die Zeichnungen sind rein schematisch. Gleiche Bezugszeichen bezeichnen gleiche Teile, wobei nicht in allen Figuren sämtliche Teile mit Bezugszeichen versehen sind. Im Einzelnen zeigen:
- Fig. 1: eine perspektivische Ansicht eines erfindungsgemäßen Reinigungsmoduls 1, seitlich angebaut an ein automatisches Transportsystem 2;
- Fig. 2: die Anordnung der Figur 1 in Seitenansicht auf das Reinigungsmodul;
- Fig. 3: eine Ansicht auf die linke Stirnseite der Anordnung der Figur 2;
- Fig. 4: eine perspektivische Ansicht der Anordnung gemäß Figur 1 von der dem Reinigungsmodul 1 gegenüberliegenden Seite;
- Fig. 5: eine Draufsicht auf die Anordnung der Figur 1;
- Fig. 6: eine teilweise geschnittene Darstellung einer Prüfvorrichtung 8 unter Verwendung einer Dombeleuchtung;
- Fig. 7: eine teilweise geschnittene Darstellung einer weiteren Prüfvorrichtung 8 unter Verwendung einer koaxial eingespielten Beleuchtung;
- Fig. 8: eine Darstellung einer weiteren Prüfvorrichtung 8' unter Verwendung einer Ringbeleuchtung;
- Fig. 9: eine Draufsicht auf ein Stückgut 3 am Beispiel einer Dose;
- Fig. 10: eine geschnittene Ansicht eines Gehäuses 11' mit darin angeordnetem Reinigungsmodul 1 sowie angegliederter Absaugvorrichtung 12;
- Fig. 11: ein Beispiel einer Halterung zur Verwendung im Reinigungsmodul in perspektivischer Darstellung;
- Fig. 12: ein Ablaufdiagramm einer Variante des erfindungsgemäßen Verfahrens.

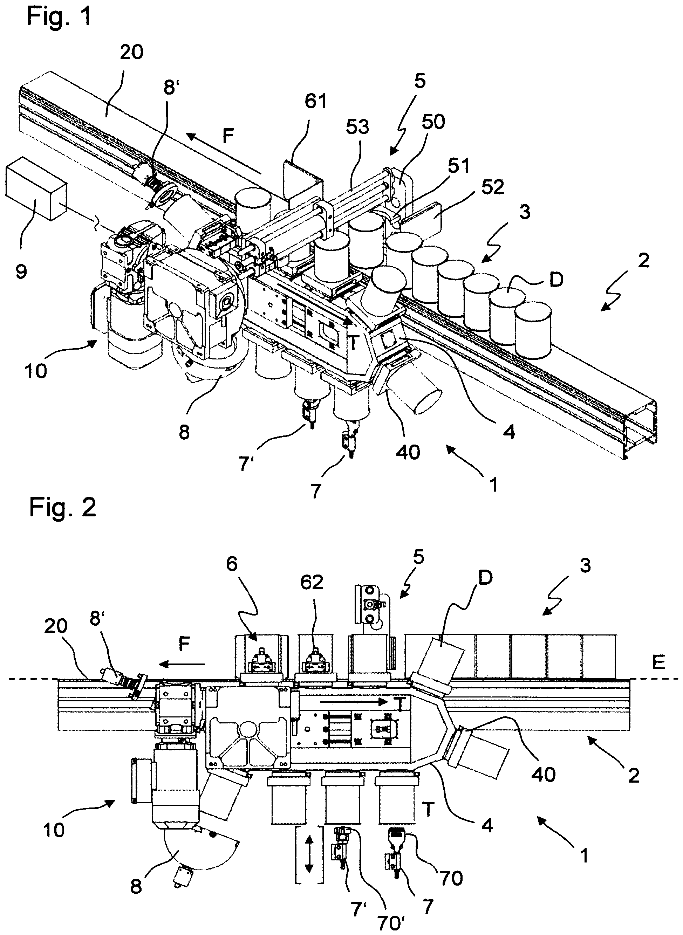

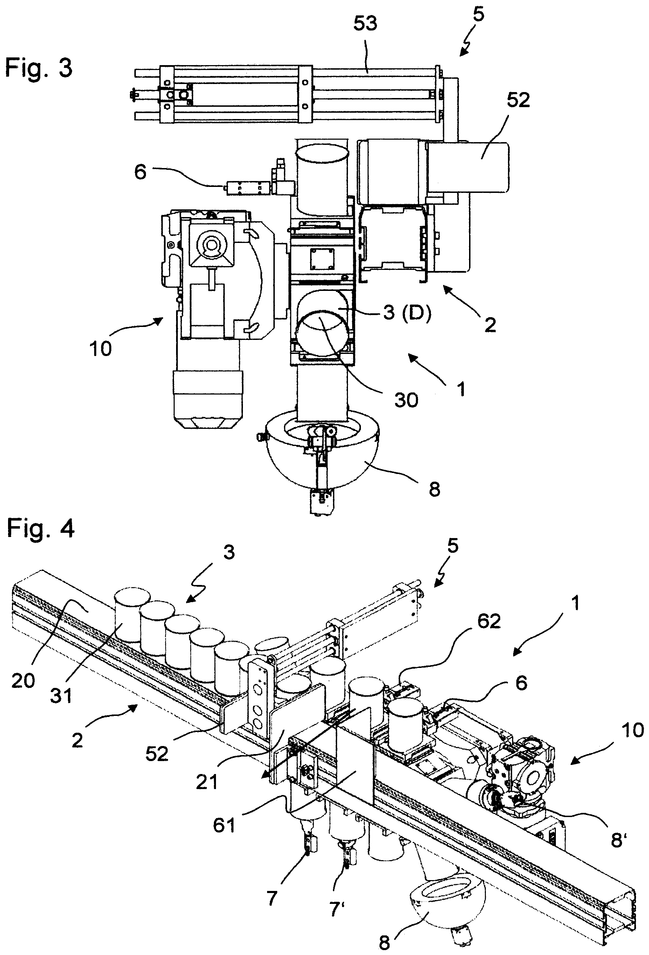

Figuren 1 bis 5 zeigen ein Ausführungsbeispiel eines erfindungsgemäßen Reinigungsmoduls 1, welches seitlich an ein automatisches Transportsystem 2 angebaut ist. Von letzterem ist nur ein Teilbereich eines Förderbandes 20 gezeigt, auf welchem aufrecht stehende, noch unverschlossene Dosen D als Stückgüter 3 in einer Förderrichtung F transportiert werden. Die seitlichen Begrenzungen, welche ein Herabfallen der Dosen verhindern, sind hier der Übersichtlichkeit halber weggelassen. Bei den Dosen D kann es sich beispielsweise um Weißblechdosen handeln, wie sie von der Lebensmittelindustrie zum Befüllen mit Suppe, Eintopf oder ähnlichem verwendet werden. Um Verschmutzungen wie beispielsweise Staub aus den Dosen zu entfernen, die während der Lagerung in das Innere der Dosen gelangt sein könnten, sollen diese vor dem Befüllen gereinigt werden. Hierzu dient das Reinigungsmodul 1, welches seitlich an einem linear verlaufenden Abschnitt des Förderbandes 20 angeordnet ist.

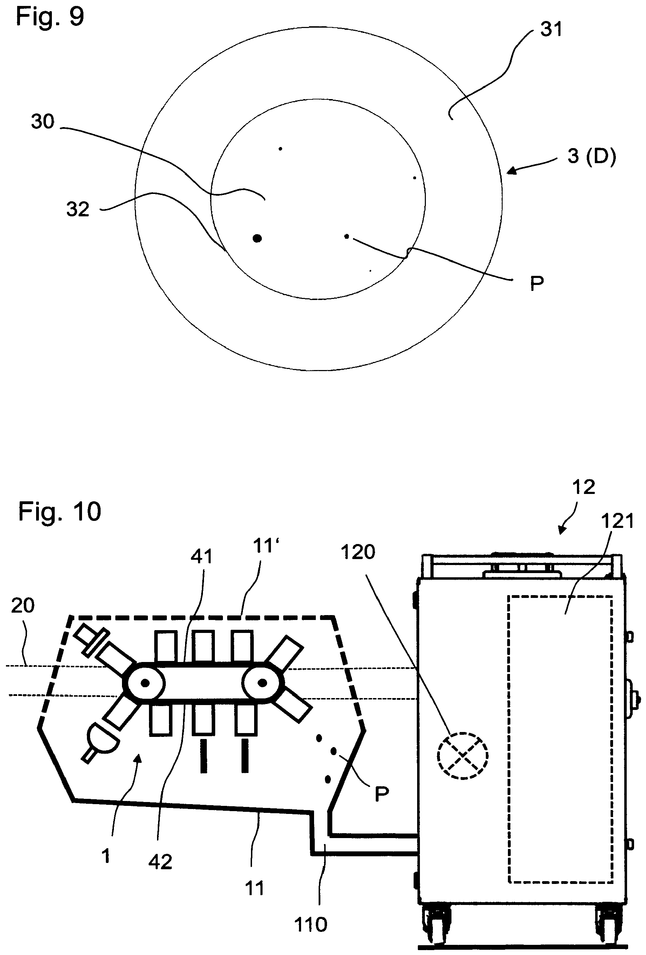

Das Reinigungsmodul 1 umfasst ein linear umlaufendes Transportband 4, welches als Gliederkette mit Laufrollen (letztere hier nicht sichtbar) ausgebildet ist. Das Transportband 4 wird mithilfe einer Antriebsvorrichtung 10 getaktet betrieben. Die einzelnen Glieder der Gliederkette werden also in vorgegebenen Zeitintervallen eine vorgegebene Wegstrecke in der Transportrichtung T vorwärts bewegt. Der Transport erfolgt hier im Uhrzeigersinn bei Draufsicht auf das vor der Transportvorrichtung liegende Reinigungsmodul (wie in Figur 2). Die Transportrichtung T verläuft also für das Obertrum 41 (Fig. 10) des Transportbandes 4, welches benachbart zum Förderband 20 des Transportsystems angeordnet ist, entgegen der Förderrichtung F des Förderbandes.

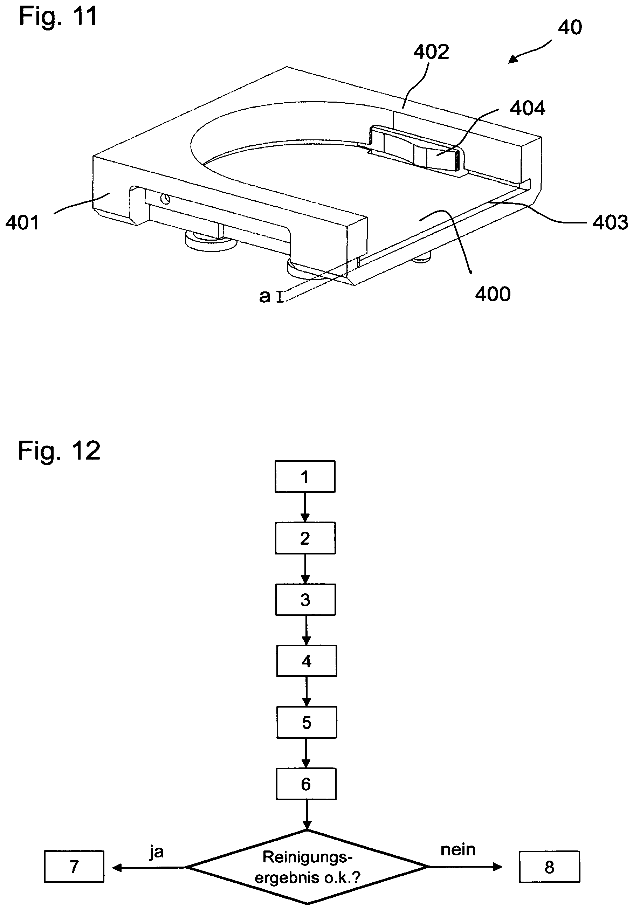

Auf den Gliedern der Gliederkette des Transportbandes sind Halterungen 40 befestigt, welche zur Aufnahme der Stückgüter 3, sprich der Dosen D, ausgebildet sind. Figur 11 zeigt schematisch eine Halterung 40. Diese weist eine im Wesentlichen quadratische Bodenplatte 400 auf, von der sich an drei Seiten Seitenwände 401 senkrecht nach oben erstrecken, wobei auf derjenigen Seite, die im montierten Zustand zur Transportvorrichtung 2 weist, keine Seitenwand vorhanden ist. Von den drei Seitenwänden ausgehend verläuft ein Flansch 402 parallel zur Bodenplatte 400 nach innen. Die Innenkontur des Flansches ist U-förmig, wobei die freien Enden der Schenkel oberhalb der Kante der Bodenplatte 400 zu liegen kommen, welche zur Transportvorrichtung hin liegt. Somit ergibt sich auf dieser Seite eine Einschuböffnung 403, durch welche eine Dose D in die Halterungen 40 eingeschoben werden kann. Der Abstand a zwischen Oberseite der Bodenplatte 400 und Unterseite des Flansches 402 ist dabei etwas größer als die Höhe des unteren Randes der Dose, welcher seitlich über deren zylindrischen Außenumfang vorsteht. Der Dosenrand kommt also unterhalb des Flansches 402 zwischen Flansch und Bodenplatte 400 zu liegen. Wird die in die Halterung 40 eingeschobene Dose in Transportrichtung T vom Transportband 4 weiterbefördert und dabei mit der Öffnung nach unten gedreht, wird die Dose durch den Flansch 402 gehalten und kann so auch über Kopf transportiert werden, ohne aus der Halterung 40 herauszufallen. Damit Dose D nicht unbeabsichtigt durch die Öffnung 403 herausrutscht, ist an einer Seitenwand eine Sperrklinke 404 vorhanden, die entweder durch Federkraft oder motorisch in einer Richtung quer zu der Seitenwand bewegt werden kann. Wird eine Dose in die Halterung 40 eingeschoben, wird eine zum Beispiel federnd gelagerte Sperrklinke 404 nach außen weggedrückt und schnappt wieder nach innen zurück, wenn die Dose mit ihrem maximalen Durchmesser die Sperrklinke passiert hat, und fixiert diese so in der Halterung. Solange die Dose D die einzelnen Stationen des Reinigungsmoduls 1 durchläuft, bleibt die Sperrklinke 404 in Sperrposition, wie in Figur 11 gezeigt, und verhindert ein unbeabsichtigtes Herausfallen der Dose. Soll die Dose aus der Halterung 40 entfernt werden, wird die Sperrklinke 404 entweder mechanisch oder motorisch nach außen bewegt, sodass sie die Dose freigibt. Durch Verwendung angeschrägter Gleitflächen 4040, 4041, an denen das Dosenäußere beim Ein- und Ausschieben entlanggleiten kann, ist es möglich bei entsprechender Einstellung der auf die Sperrklinke wirkenden Federkraft allein aufgrund der Krafteinwirkung der Zufuhr- bzw. Rückführvorrichtung dafür zu sorgen, dass die Dose in die Halterung eingeschoben bzw. aus ihr herausgeschoben werden kann, während die Gewichtskraft der Dose allein nicht ausreicht, die Sperrwirkung der Sperrklinke aufzuheben.

Die in einer Reihe auf dem Förderband 20 anstehenden Dosen D werden mithilfe einer Zufuhrvorrichtung 5 nacheinander in die Halterungen 40 auf dem Transportband 4 des Reinigungsmoduls 1 überführt. Dafür weist die Zufuhrvorrichtung 5 einen von einem Motor angetriebenen und quer zur Förderrichtung F beweglichen Schieber 50 mit einem gerundeten Vorsprung 51 auf, dessen Rundung der Außenkontur der Dosenseitenwand angepasst ist. Durch Einfahren des Schubgestänges 53 wird die dem Schieber 50 benachbarte Dose in eine freie Halterung 40 geschoben. Ein seitlich vorstehendes Sperrblech 52, das auch über einen eigenen Antrieb verfügen kann, blockiert die nachfolgende Dose, sodass diese in einem gewünschten Abstand zur Zufuhrvorrichtung 5 auf dem Förderband 20 stehen bleibt. Die Fortbewegung des Förderbandes 20 kann während der Umsetzung der Dose vom Förderband in die Halterung 40 gestoppt werden. Es ist jedoch ebenfalls möglich, das Förderband 20 konstant durchlaufen zu lassen. In diesem Fall können seitlich der Dosenschlange (hier nicht gezeigte) Begrenzungen vorgesehen werden, die ein Herabfallen der Dosen vom Förderband 20 verhindern. Eine Sperrplatte 21 in Förderrichtung im Anschluss an die Zufuhrvorrichtung 5 verhindert den Weitertransport der Dosen über die Zufuhrvorrichtung hinaus. Das bereits erwähnte Sperrblech 52 verhindert zudem einen Staudruck der auf die Verarbeitung wartenden Dosen auf die erste Dose der Schlange, die von der Zufuhrvorrichtung 5 auf das Reinigungsmodul 1 umgesetzt wird. Das Reinigungsmodul 1 ist dabei in seiner Höhe bezüglich des Förderbandes 20 so angeordnet, dass die Oberfläche der Bodenplatte 400, welche in der Transportebene des Obertrums 41 des Transportbandes 4 liegt, mit der Förderebene des Förderbandes 20, also derjenigen Ebene, auf der die Dosen D mit ihrem Boden aufstehen, eine gemeinsame Ebene E bildet (Fig. 2). Die Dosen können daher ohne Änderung ihrer Höhenlage vom Förderband 20 in die Halterungen 40 eingeschoben werden. Nach dem Einschieben fährt, wie beschrieben, die Sperrklinke 404 in die Sperrposition und fixiert so die Dose gegen Herausrutschen aus der Halterung 40.

Danach setzt die Antriebsvorrichtung 10 das Förderband 4 einen Transportschritt in Transportrichtung T in Bewegung, bis die nächste Halterung 40 gegenüber der Zufuhrvorrichtung 5 zu liegen kommt. Nun wird die nächste Dose wie beschrieben in die Halterung eingesetzt, und dann das Transportband 4 erneut einen Schritt weiter bewegt usw. Durch die schrittweise Weiterbewegung des Transportbandes 4 wandern die Dosen in den Halterungen 40 über den stirnseitigen Umlenkbereich des Transportbandes weiter und werden dabei gekippt, bis sie am Untertrum 42 mit ihrer Öffnung nach unten hängen. Während dieses Kippvorgangs fallen bereits lose an der Oberfläche der Dose anhaftende Schmutzpartikel P herab. Die restlichen im Inneren der Dose anhaftenden Schmutzpartikel werden mithilfe der Reinigungsvorrichtungen 7 und 7' entfernt. Diese befinden sich auf der Unterseite des Transportbandes 4 nebeneinander unmittelbar im Anschluss an dessen stirnseitigen Umlenkbereich. Beide Reinigungsvorrichtungen sind zur Reinigung des Doseninneren mit ionisierter Druckluft ausgebildet und besitzen jeweils eine Ausblasdüse 70, 70', die so angeordnet ist, dass sie unmittelbar unterhalb einer Dosenöffnung zu liegen kommt, wenn eine Halterung 40 mit darin befestigter Dose D zur Position der Reinigungsstation 7 oder 7' befördert wurde. Im gezeigten Fall sind die Ausblasdüsen 70, 70' feststehend. Möglich ist jedoch auch, diese in Pfeilrichtung beweglich anzuordnen, sodass sie zum Reinigen in die Dosen hinein verfahren werden können.

Die Reinigungsvorrichtungen 7 und 7' werden so betrieben, dass sie ionisierte Druckluft nicht kontinuierlich abgegeben, sondern nur dann, wenn sich eine Dose in Reinigungsposition, also gegenüberliegend einer Ausblasdüse, befindet. Dies wird durch den getakteten, schrittweisen Vorschub des Transportbandes 4 und den mit diesem koordinierten Betrieb der Reinigungsvorrichtungen ermöglicht. Der diskontinuierliche, auf den Vorschub des Transportbandes 4 abgestimmte Betrieb der Ausblasdüse hat den Vorteil des geringeren Druckluft- und damit Energieverbrauchs. Gleichzeitig sinkt die Geräuschbelastung der Umgebung. Im gezeigten Beispiel werden als Ausblasdüsen 70, 70' Rotationsdüsen verwendet, von denen eine einen ionisierten Luftstrom ausstößt, der im Uhrzeigersinn rotiert, während die andere eine entgegen dem Uhrzeigersinn drehenden Luftstrom erzeugt. Die gegenläufigen Luftströmungen haben den Vorteil, dass die an der Doseninnenoberfläche anhaftenden Partikel von unterschiedlichen Seiten angegriffen werden, was ihre Ablösung fördert. Weiter wird die Ablösung von Schmutzpartikel durch die Verwendung ionisierter Luft erleichtert, da diese die statische Aufladung der Dosenoberfläche reduziert und damit die statische Anhaftung der Schmutzteilchen verringert. Ausblasgeschwindigkeit, räumliche Verteilung der Luftströmung und Dauer derselben werden entsprechend dem zu reinigenden Stückgut, hier der Dose, und der vorgefundenen Verschmutzung ausgewählt und können durch einfache Versuche leicht ermittelt werden.

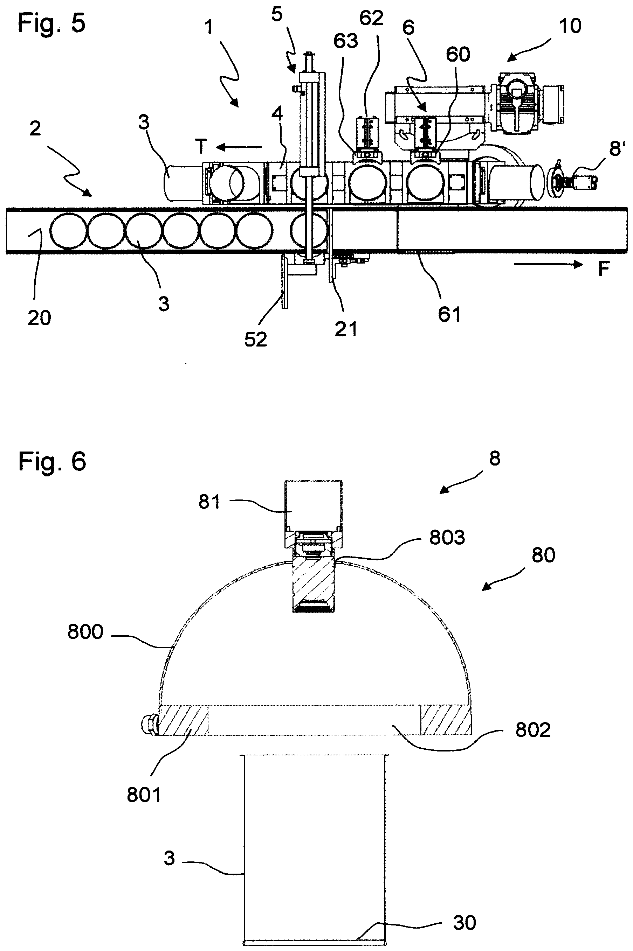

Nach dem Durchlaufen der Reinigungsvorrichtungen 7, 7' werden die Dosen durch schrittweisen Transport weiter zu zwei Prüfvorrichtungen 8, 8' transportiert, welche nacheinander von den Dosen durchlaufen werden. Die erste Prüfvorrichtung 8 weist eine Vorrichtung 80 auf, welche das Doseninnere mittels einer Dombeleuchtung beleuchtet. Figur 6 zeigt die Prüfvorrichtung 8 in vergrößerter und bezüglich der Dombeleuchtungs-Vorrichtung 80 geschnittener Darstellung. Letztere weist einen kalottenförmigen Reflektor 800 auf, an dessen unterem Rand eine Lichtquelle 801 in Form eines ringförmig um die Reflektoröffnung 802 verlaufenden LED-Bandes angeordnet ist. Das von diesem abgestrahlte Licht wird vom Reflektor 800 in Richtung auf das Doseninnere reflektiert. Das vom Dosenboden 30 reflektierte Licht tritt durch eine Auslassöffnung 803 im apikalen Bereich des Reflektors aus und wird dort von einer Kamera 81, konkret einer Digitalkamera, aufgenommen. Die Abgabe des Lichtes durch die Lichtquelle 801 und der Auslösemechanismus der Kamera 81 sind dabei in an sich bekannter Weise miteinander koordiniert. Die von der Kamera 81 übermittelten Bilddaten werden dann an die Auswertungs- und Steuervorrichtung 9 übermittelt, welche in den Figuren lediglich schematisch in Figur 1 angegeben und welche im konkreten Fall in eine externe Computeranlage integriert ist, welche ebenfalls zur Steuerung der automatischen Transportvorrichtung 2 dient.

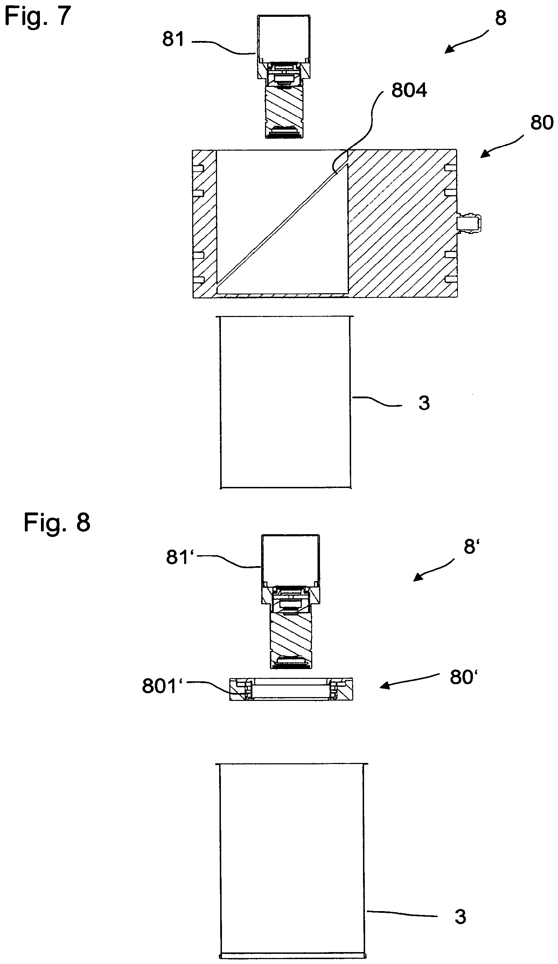

Alternativ zu einer Dombeleuchtung kann auch eine koaxial eingespielte Beleuchtung zur Ausleuchtung des Dosenbodens verwendet werden. Der schematische Aufbau einer solchen Beleuchtungsvorrichtung ist in Figur 7 dargestellt. Als Lichtquelle wird erneut ein LED-Band verwendet, das diesmal seitlich in einem Gehäuse angeordnet ist. Das von der Lichtquelle abgegebene Licht wird von einem halbdurchlässigen Spiegel 804 in Richtung auf die Dose abgelenkt, vom Dosenboden 30 reflektiert, vom halbdurchlässigen Spiegel 804 durchgelassen und von einer Kamera 81 aufgenommen. Die Steuerung der Komponenten und die Weiterleitung der Bilddaten erfolgen entsprechend dem für die Dombeleuchtung Beschriebenen.

Dombeleuchtung und koaxial eingespielte Beleuchtung, welche in der ersten Prüfvorrichtung 8 eingesetzt werden können, führen zu einer sehr guten Beleuchtung des Dosenbodens 30. Fig. 9 veranschaulicht, wie eine solche Aufnahme aussehen könnte. Die Schmutzpartikel sind dabei mit P bezeichnet. In einer Aufnahme, welche unter Verwendung einer Koaxial- oder Dombeleuchtung angefertigt wurde, ist das Zentrum des Dosenbodens 30 besser ausgeleuchtet als dessen Randbereich in Nachbarschaft zur Seitenwand 31. Der dunkle Ring 32 stellt den äußeren Rand des Dosenbodens 30 dar. Die Randbereiche des Dosenbodens in unmittelbarer Nachbarschaft zu deren Seitenwand 31 bleiben jedoch etwas verschattet, sodass in diesem Bereich eine Untersuchung auf Schmutzpartikel nicht optimal erfolgen kann. Aus diesem Grund ist im erfindungsgemäßen Reinigungsmodul 1 eine weitere Prüfvorrichtung 8' der ersten Prüfvorrichtung 8 in Transportrichtung nachgelagert angeordnet. Die zweite Prüfvorrichtung 8' bedient sich einer Beleuchtungsvorrichtung 80' unter Verwendung einer Ringbeleuchtung. Eine vergrößerte Darstellung findet sich in Figur 8. Als Lichtquelle 801' dient ein ringförmig geschlossenes LED-Band, mit dem Licht nun nicht senkrecht, sondern leicht schräg in Richtung auf den Dosenboden 30 ausgestrahlt wird. Dies führt zu einer besseren Ausleuchtung der Randbereiche des Dosenbodens. Aufnahme und Weiterleitung der Bilddaten sowie die Steuerung der Vorrichtung erfolgen entsprechend dem bereits für die erste Prüfvorrichtung beschriebenen Vorgehen.

In der Auswertungs- und Steuervorrichtung 9 werden die gesammelten Bilddaten ausgewertet und so miteinander kombiniert, dass sich ein vollständiges Bild des Dosenbodens ergibt. Falls gewünscht, können ebenfalls die bildlich erfassten Seitenwandbereiche bei der Ermittlung des Verschmutzungsgrades einbezogen werden. Es ist jedoch in der Regel ausreichend, es bei der Auswertung des Dosenbodens 30 zu belassen, da dessen Verschmutzungsgrad Rückschlüsse auf die Verschmutzung der Seitenwand 31 der Dose zulässt sich am Boden der meiste Schmutz befinden wird. In der Auswertungs- und Steuervorrichtung 9 erfolgt eine Auszählung der Schmutzpartikel P, welche sich in den von den Prüfvorrichtungen 8, 8' übermittelten Fotos bzw. Bilddaten als anders gefärbte Punkte von dem Hintergrund des Dosenbodens abheben. Zweckmäßig ist es, lediglich Partikel bzw. Punkte mit einem festgelegten Durchmesserbereich bzw. einem bestimmten Flächenbereich auszuzählen, um so beispielsweise Fehler durch Verpixelung auszuschließen. Bei der Auszählung von Staubpartikeln hat es sich als sinnvoll erwiesen, nur solche Punkte mit einer Fläche von mehr als 0,1 mm² zu berücksichtigen. Die Anzahl der ausgezählten Staubpartikel wird mit einer in der Auswertungs- und Steuervorrichtung 9 hinterlegten zulässigen Anzahl verglichen. Unterschreitet die gezählte Staubpartikel-Anzahl den hinterlegten Grenzwert, gibt die Auswertungs- und Steuervorrichtung 9 einen Befehl an die Rückführvorrichtung 6 des Reinigungsmoduls aus, die zum Prüfergebnis gehörende Dose D dem Transportsystem 2 wieder zuzuführen. Ist die Staubpartikel-Anzahl jedoch höher als der Grenzwert oder entspricht diesem, wird ein Befehl ausgegeben, die entsprechende Dose nicht wieder auf das Förderband 20 des Transportsystems 2 zurückzustellen, sondern diese aus dem System auszuschleusen.

Bei der Rückführvorrichtung 6 handelt es sich im gezeigten Beispiel um einen motorbetriebenen Schieber 60, dessen Form wie beim Schieber der Zufuhrvorrichtung 5 der Rundung der Dose angepasst ist. Die Rückführvorrichtung ist in Transportrichtung unmittelbar der zweiten Prüfvorrichtung 8' nachgelagert und befindet sich direkt im Anschluss an den gekrümmten Übergangsbereich des Transportbandes zu Beginn des Obertrums 41, wo das Transportband 4 wieder waagerecht und parallel zum Förderband 20 verläuft. Durch Ausfahren des Schiebers 60 der Rückführvorrichtung 6 wird die Dose D aus der Halterung 40 und dem Reinigungsmodul heraus auf das Förderband 20 geschoben. Zuvor wird die Sperrklinke 404 gelöst, sodass die Dose aus der Einschuböffnung 403 herausgeschoben werden kann. Der Rückführvorrichtung 6 gegenüberliegend ist auf dem Förderband 20 ein Winkelblech 61 angeordnet, welches die Positionierung der Dose auf dem Förderband erleichtert. Nachdem die Dose auf das Förderband 20 überstellt worden ist, wird es von diesem in Förderrichtung F weitertransportiert, beispielsweise um in einer weiteren, hier nicht gezeigten Bearbeitungsstation befüllt zu werden.

Hat die Prüfung des Reinigungsergebnisses ergeben, dass eine Dose nicht ausreichend gereinigt wurde, wird diese nicht auf das Förderband 20 zurückgeschoben, sondern ausgeschleust. Die Auswertungs- und Steuervorrichtung 9 übermittelt an die Rückführvorrichtung 6 einen Befehl, dass deren Schieber 60 nicht betätigt wird, wenn die entsprechende Dose die Position vor der Rückführvorrichtung 6 erreicht hat. Entsprechend fährt die Dose in der Halterung 40 beim nächsten Transportschritt des Transportbandes 4 an der Rückführvorrichtung 6 vorbei zur in Transportrichtung nachfolgenden Station. Dort ist eine Ausschleusvorrichtung 62 angeordnet, welche ebenfalls einen motorbetriebenen Schieber 63 aufweist und grundsätzlich wie die Rückführvorrichtung 6 ausgebildet ist. Alternativ zu den Schiebern 60, 63 der beiden Vorrichtungen können auch Blasvorrichtungen vorgesehen sein, welche die Dosen durch Beaufschlagung mit Druckluft bewegen. Die Ausschleusvorrichtung 62 schiebt die unzureichend gereinigte Dose nach dem Zurückbewegen der Sperrklinke 404 aus der Halterung 40 heraus über das Förderband 20 hinweg, wie mit dem Pfeil angedeutet, und schleust die Dose so aus dem Reinigungsmodul 1 und dem Transportsystem 2 aus. An der Stelle, wo die aussortierte Dose vom Förderband 20 herabfällt, kann ein Sammelbehälter aufgestellt werden, welcher die Dose auffängt. Alternativ ist es möglich, gegenüber der Ausschleusvorrichtung 62 ein weiteres, hier nicht dargestelltes, Transportband anzuordnen, welches die aussortierte Dose aufnimmt und zur weiteren Verwendung abtransportiert. Beispielsweise kann die Dose einem in Förderrichtung aufwärtigen Bereich des Förderbandes 20 wieder zugeführt werden, sodass sie nochmals zum Reinigungsmodul 1 gelangt und erneut gereinigt werden kann.

Um zu verhindern, dass Schmutzpartikel, welche von den Dosen D entfernt wurden, die Umgebung des Reinigungsmoduls 1 verunreinigen, kann unter diesem eine Wanne 11 angeordnet werden. Die Wanne 11 kann auch Teil eines Gehäuses 11' sein, welches das Reinigungsmodul insgesamt umgibt und gegebenenfalls auch einen dem Reinigungsmodul benachbarten Abschnitt des automatischen Transportsystems 2 einschließt. Das Gehäuse 11' sieht dann Öffnungen für das Förderband 20 und die darauf befindlichen Dosen D vor. Außerdem können Sichtfenster und/oder Revisionsklappen im Gehäuse vorhanden sein, die die Sicht und den Zugriff auf die im Gehäuse befindlichen Komponenten ermöglichen. Die grundsätzliche Anordnung ist stark schematisiert in Figur 10 dargestellt, wobei das Gehäuse geschnitten wiedergegeben ist. Wie in Figur 10 ersichtlich, weist die Wanne in ihrem tiefsten Abschnitt einen Auslassstutzen 110 auf, an den eine Absaugvorrichtung 12 angeschlossen ist. In dieser sind zweckmäßig ein Sauggebläse 120 sowie eine Filtereinheit 121 angeordnet, die zweckmäßig ebenfalls über Türen oder Klappen zugänglich sind. Um die Handhabung zu erleichtern, kann die Absaugvorrichtung 12 fahrbar auf Rollen angeordnet sein. Während des Betriebs des Reinigungsmoduls von den Dosen abgelöste Schmutzpartikel P fallen auf den Boden der Wanne 11 herunter und werden durch den Auslassstutzen 110 hindurch in die Absaugvorrichtung 12 gesaugt. Dort passiert die verschmutzte Luft die Filtereinheit 121, wo die Schmutzpartikel P zurückgehalten werden und die Luft gereinigt die Absaugvorrichtung 12 verlässt. Das Sauggebläse 120 wird so betrieben, dass mehr Luft durch den Auslassstutzen 110 aus dem Gehäuse 11' gefördert wird, als durch die Reinigungsvorrichtungen 7, 7' in das Gehäuse eingeblasen wird. Im Bereich des Gehäuses entsteht dadurch ein Unterdruck, der verhindert, dass Schmutzpartikel aus dem Gehäuse nach außen gelangen, ohne die Filtereinheit 121 passiert zu haben. Auf diese Weise kann eine Verunreinigung in der Umgebung des Reinigungsmoduls 1 sicher verhindert werden.

Figur 12 schließlich veranschaulicht den Ablauf des erfindungsgemäßen Verfahrens zum Betrieb des Reinigungsmoduls 1, wie dieses unter Bezugnahme auf die vorangegangenen Figuren beschrieben wurde. Zur Vereinfachung wird das Verfahren jedoch für ein Reinigungsmodul beschrieben, bei dem nur eine Reinigungsvorrichtung 7 und eine Prüfvorrichtung 8 vorhanden ist. In Schritt 1 des Verfahrens wird ein Stückgut 3, im gezeigten Beispiel eine Dose D, von dem Transportsystem 2, konkret vom Förderband 20, mittels der Zufuhrvorrichtung 5 in eine Halterung 40 auf dem Transportband 4 des Reinigungsmoduls 1 überführt. In Schritt 2 wird die in der Halterung 40 befestigte Dose D durch Bewegen des Transportbandes 4 in der Transportrichtung T zu der Reinigungsvorrichtungen 7 befördert. In Schritt 3 wird von der Reinigungsvorrichtung 7, konkret mittels Ausblasdüse 70, ionisierte Druckluft in Richtung auf die Dose geblasen, um Verunreinigungen von deren Oberfläche zu entfernen. Im Anschluss daran wird in Schritt 4 die Dose durch Bewegen des Transportbandes 4 in Transportrichtung T zu der Prüfvorrichtung 8 transportiert. Dort wird in Schritt 5 das Ergebnis des Reinigungsvorgangs, hier mittels einer optischen Prüfvorrichtung, festgestellt und das Ergebnis des Prüfvorgangs an die Auswertungs- und Steuervorrichtung 9 übermittelt. Diese wertet in Schritt 6 das Reinigungsergebnis aus. Wird dabei festgestellt, dass das Reinigungsergebnis den Vorgaben entspricht, wird in Schritt 7 von der Auswertungs- und Steuervorrichtung 9 ein Steuerbefehl an die Rückführvorrichtung 6 übermittelt, die Dose zum Transportsystem 2 zurückzuführen. Ist das Ergebnis der Auswertung allerdings, dass das Reinigungsergebnis nicht ausreichend ist, ergeht eine Anweisung an die Rückführvorrichtung 6, die Dose nicht wieder dem Transportsystem zuzuführen (Schritt 8). Stattdessen steuert die Auswertungs- und Steuervorrichtung 9 im gezeigten Beispiel die Ausschleusvorrichtung 62 so, dass die Dose aus dem Reinigungsmodul 1 und dem Transportsystem 2 ausgeschleust wird.

## Patentansprüche

1. Reinigungsmodul (1) zur Integration in ein automatisches Transportsystem (2) für Stückgüter (3), umfassend:
ein geschlossen umlaufendes Transportband (4) mit Halterungen (40) zur Aufnahme der Stückgüter (3),
eine Zufuhrvorrichtung (5) zum Überführen der Stückgüter (3) von dem Transportsystem (2) in die Halterungen (40),
eine der Zufuhrvorrichtung (5) in Transportrichtung (T) des Transportbandes (4) nachgelagerte Rückführvorrichtung (6) zum Rückführen der Stückgüter (3) vom Reinigungsmodul (1) zum Transportsystem (2),
wenigstens eine benachbart zum Transportband (4) im Bereich zwischen Zufuhrvorrichtung (5) und Rückführvorrichtung (6) angeordnete Reinigungsvorrichtung (7), welche ausgebildet ist, ein flüssiges oder gasförmiges Reinigungsmedium in Richtung auf wenigstens ein in einer Halterung (40) angeordnetes Stückgut (3) abzugeben,
wenigstens eine der Reinigungsvorrichtung (7) in Transportrichtung (T) nachgelagerte Prüfvorrichtung (8), welche ausgebildet ist, das Reinigungsergebnis der Reinigungsvorrichtung (7) festzustellen und das ermittelte Ergebnis an eine Auswertungs- und Steuervorrichtung (9) zu übermitteln, wobei
die Auswertungs- und Steuervorrichtung (9) ausgebildet ist, das Ergebnis auszuwerten und anhand der Auswertung die Rückführvorrichtung (6) so zu steuern, dass das Stückgut (3) entsprechend dem für dieses ermittelten Reinigungsergebnis entweder von der Rückführvorrichtung (6) zum Transportsystem (2) zurückgeführt oder aus dem Reinigungsmodul (1) und dem Transportsystem (2) ausgeschleust wird.

2. Reinigungsmodul gemäß Anspruch 1, aufweisend eine Antriebsvorrichtung (10) für einen getakteten Betrieb des Transportbandes (4).

3. Reinigungsmodul gemäß einem der vorhergehenden Ansprüche, worin das Transportband (4) als Gliederkette, bevorzugt als linear umlaufende Gliederkette, insbesondere als Gliederkette mit Laufrollen, ausgebildet und bevorzugt so angeordnet ist, dass Obertrum (41) und Untertrum (42) im Wesentlichen waagerecht verlaufen.

4. Reinigungsmodul gemäß einem der vorhergehenden Ansprüche, worin die wenigstens eine Reinigungsvorrichtung ausgebildet ist, Gas wie Druckluft und insbesondere ionisierte Druckluft abzugeben.

5. Reinigungsmodul gemäß Anspruch 4, worin die Reinigungsvorrichtung (7) wenigstens eine Ausblasdüse (70) aufweist, welche optional in Richtung auf das Transportband (4) und wieder zurück verfahren werden kann und welche bevorzugt als Ausblasnadel, Ringdüse oder Rotationsdüse ausgebildet ist.

6. Reinigungsmodul gemäß einem der vorhergehenden Ansprüche, welches mehrere Reinigungsvorrichtungen (7, 7'), vorzugsweise in Transportrichtung (T) hintereinander angeordnet, umfasst, wobei insbesondere zwei Reinigungsvorrichtungen mit je einer Rotationsdüse vorhanden sind, von denen die eine eine im Uhrzeigersinn drehende Luftströmung erzeugt und die andere eine entgegen dem Uhrzeigersinn drehende Luftströmung.

7. Reinigungsmodul gemäß einem der vorhergehenden Ansprüche, worin die Prüfvorrichtung (8) eine optische Prüfvorrichtung ist, welche bevorzugt eine Beleuchtungsvorrichtung (80) und eine Kamera (81), insbesondere eine Digitalkamera, umfasst.

8. Reinigungsmodul gemäß Anspruch 7, worin mehrere in Transportrichtung (T) hintereinander angeordnete optische Prüfvorrichtungen (8, 8') vorhanden sind, von denen bevorzugt eine eine Vorrichtung (80) für eine Dombeleuchtung oder koaxial eingespiegelte Beleuchtung des Stückguts (3) und eine erste Kamera (81) aufweist und eine zweite eine Vorrichtung (80') für eine Ringbeleuchtung des Stückguts (3) sowie eine zweite Kamera (81') umfasst.

9. Reinigungsmodul nach einem der vorhergehenden Ansprüche, worin die Halterungen (40) zum, insbesondere formschlüssigen, Halten einer oder mehrerer Dosen (D), Flaschen, Gläser oder Tiegel und bevorzugt zum Halten jeweils eines dieser Stückgüter (3) ausgebildet sind.

10. Reinigungsmodul nach einem der vorhergehenden Ansprüche, worin das Transportband (4) mit unterschiedlichen Halterungen (40) zum Halten verschiedener Arten von Stückgütern (3) und/oder zum Halten gleichartiger Stückgüter (3) unterschiedlicher Größe versehen ist, wobei bevorzugt die unterschiedlichen Halterungen im gleichmäßigen Wechsel auf dem Transportband (4) angeordnet sind.

11. Reinigungsmodul nach einem der vorhergehenden Ansprüche, worin unterhalb des Transportbandes (4) eine Wanne (11) zum Auffangen von während des Reinigungsvorgangs herabfallenden Partikeln angeordnet ist, wobei die Wanne (11) bevorzugt Teil eines das Reinigungsmodul (1) umgebenden Gehäuses (11') ist.

12. Automatisches Transportsystem (2), umfassend ein Förderband (20) zum Fördern von Stückgütern (3) in einer Förderrichtung (F) sowie ein seitlich des Förderbandes (20) angeordnetes Reinigungsmodul (1) gemäß einem der vorhergehenden Ansprüche.

13. Automatisches Transportsystem gemäß Anspruch 12, worin das Reinigungsmodul (1) so bezüglich des Förderbandes (20) angeordnet ist, dass eine Förderebene des Förderbandes (20) und eine Transportebene des Transportbandes (4) in einer Ebene (E) liegen und in dieser Ebene (E) die Transportrichtung (T) des Transportbandes (4) sich von der Förderrichtung (F) des Förderbandes (20) unterscheidet und dieser bevorzugt entgegengerichtet ist.

14. Automatisches Transportsystem gemäß Anspruch 12 oder 13, worin das Reinigungsmodul (1) so angeordnet ist, dass sich Zufuhrvorrichtung (5) und Rückführvorrichtung (6) auf der Seite des Transportbandes (4) befinden, welche der Transportebene (E) des Förderbandes (20) benachbart liegt, während die wenigstens eine Reinigungsvorrichtung (7, 7') auf der von der Transportebene (E) abgewandten Seite des Transportbandes (4) angeordnet ist.

15. Verfahren zum Betrieb eines Reinigungsmodul (1) nach einem der Ansprüche 1 bis 11, umfassend die Schritte:
Überführen eines Stückguts (3) von einem Transportsystem (2) in eine Halterung (40) mittels der Zufuhrvorrichtung (5),
Befördern des Stückguts (3) zu der Reinigungsvorrichtung (7) durch Bewegen des Transportbandes (4) in der Transportrichtung (T),
Abgeben des flüssigen oder gasförmigen Reinigungsmediums in Richtung auf das Stückgut (3), Befördern des Stückguts (3) zu der Prüfvorrichtung (8) durch Bewegen des Transportbandes (4) in der Transportrichtung (T),
Feststellen des Reinigungsergebnisses der Reinigungsvorrichtung (7) mittels der Prüfvorrichtung (8) und Übermittlung des Ergebnisses an eine Auswertungs- und Steuervorrichtung (9), Auswerten des Reinigungsergebnisses in der Auswertungs- und Steuervorrichtung (9),
Steuern der Rückführvorrichtung (6) durch die Auswertungs- und Steuervorrichtung (9) in Abhängigkeit vom Ergebnis der Auswertung des Reinigungsergebnisses derart, dass das Stückgut (3) entweder von der Rückführvorrichtung (6) zum Transportsystem (2) zurückgeführt oder aus dem Reinigungsmodul (1) und dem Transportsystem (2) ausgeschleust wird.

16. Verfahren nach Anspruch 15, worin die Auswertungs- und Steuervorrichtung (9) die Rückführvorrichtung (6) veranlasst, das Stückgut (3) zum Transportsystem (2) zurückzuführen, wenn die Auswertung des Reinigungsergebnisses ergibt, dass der Grad der Verschmutzung des Stückguts (3) einen vorgegebenen Grenzwert nicht überschreitet, wobei sich der Grad der Verschmutzung insbesondere aus der Auszählung von Schmutzpartikeln (S) auf einem von der Prüfvorrichtung (8) angefertigten Foto wenigstens eines Teils der Oberfläche des Stückguts (3) ergibt.

17. Verfahren nach Anspruch 15 oder 16, worin wenigstens einer der folgenden Schritte zusätzlich durchlaufen wird:
- Befördern des Stückguts (3) zu einer weiteren Reinigungsvorrichtung (7') durch Bewegen des Transportbandes (4) in der Transportrichtung (T) und Reinigen des Stückguts (3), insbesondere durch Blasen von Druckluft und insbesondere ionisierter Druckluft in Richtung auf das Stückgut (3),
- Befördern des Stückguts (3) zu einer weiteren Prüfvorrichtung (8') durch Bewegen des Transportbandes (4) in der Transportrichtung (T), Feststellen des Reinigungsergebnisses der wenigstens einen Reinigungsvorrichtung (7, 7') mittels der Prüfvorrichtung (8') und Übermittlung des Ergebnisses an eine Auswertungs- und Steuervorrichtung (9).

18. Verfahren nach einem der Ansprüche 15 bis 17, worin das Transportband (4) getaktet angetrieben wird, die wenigstens eine Reinigungsvorrichtung (7, 7') und die wenigstens eine Prüfvorrichtung (8, 8') an dem schrittweisen Vorschub der Halterungen (40) entsprechenden Positionen angeordnet sind und die wenigstens eine Reinigungsvorrichtung (7, 7') diskontinuierlich derart betrieben wird, dass das Reinigungsmedium, bevorzugt Druckluft und insbesondere ionisierte Druckluft, nur dann abgegeben wird, wenn sich eine mit Stückgut (3) versehene Halterung (40) zu der wenigstens einen Reinigungsvorrichtung (7, 7') benachbart befindet.

19. Verfahren nach einem der Ansprüche 15 bis 18, worin mehrere Zufuhrvorrichtungen (5) mehrere Stückgüter (3) gleichzeitig auf das Transportband (4) überführen, die Stückgüter in einer der Zahl der Zufuhrvorrichtungen (5) oder einem ganzen Vielfachen dieser Zahl entsprechenden Anzahl von Reinigungsvorrichtungen (7, 7') gereinigt, in einer der Zahl der Zufuhrvorrichtungen (5) oder einem ganzen Vielfachen dieser Zahl entsprechenden Anzahl von Prüfvorrichtungen (8, 8') geprüft und anschließend mithilfe einer der Zahl der Zufuhrvorrichtungen (5) entsprechenden Anzahl von Rückführvorrichtungen (6) weiter transportiert werden.

20. Verfahren nach einem der Ansprüche 15 bis 19, worin Stückgut (3) mit einem definierten Verschmutzungsgrad, insbesondere einer definierten Anzahl von Schmutzpartikeln versehen, bereitgestellt und durch das Reinigungsmodul (1) transportiert, durch die wenigstens eine Reinigungsvorrichtung (7, 7') gereinigt und das Reinigungsergebnis mithilfe der wenigstens einen Prüfvorrichtung (8, 8') sowie der Auswertungs- und Steuervorrichtung (9) ausgewertet wird, um das Reinigungsmodul (1) auf korrekte Funktionsweise hin zu überprüfen.
